**Europäisches Patentamt**

**European Patent Office**

**Office européen des brevets**

(11) Veröffentlichungsnummer: **0 374 912**
**A2**

# EUROPÄISCHE PATENTANMELDUNG

(21) Anmeldenummer: **89123650.7**

(22) Anmeldetag: **21.12.89**

(51) Int. Cl.⁵ **G06F 3/033, G06K 11/12**

(30) Priorität: **23.12.88 DE 3843454**

(43) Veröffentlichungstag der Anmeldung:
**27.06.90 Patentblatt 90/26**

(84) Benannte Vertragsstaaten:
**AT BE CH DE ES FR GB IT LI NL SE**

(71) Anmelder: **Karl Heesemann Maschinenfabrik
GmbH & Co KG
Reuterstrasse 15
D-4970 Bad Oeynhausen 1(DE)**

(72) Erfinder: **Heesemann, Jürgen, Dipl.-Ing.
Rotkehlchenweg 6
D-4970 Bad Oeynhausen 1(DE)**

(74) Vertreter: **Lins, Edgar, Dipl.-Phys. et al
Patentanwälte Gramm + Lins
Theodor-Heuss-Strasse 2
D-3300 Braunschweig(DE)**

(54) **Eingabevorrichtung für Steuerungsdaten von Maschinen.**

(57) Eine Eingabevorrichtung für Steuerungsdaten von Maschinen in ein Datenverarbeitungsgerät mit einem Bildschirm (1), auf dem verschiedene Steuerungsdaten angezeigt werden, ist auch für den rauhen Betrieb in staubiger Umgebung und für eine Betätigung ohne Vorkenntnisse der Bedienperson benutzbar, wenn eine durch Druck betätigbare Foliensignalanordnung (11, 11′, 11″, 16) zur Erzeugung von Signalen in Abhängigkeit von der Position des ausgeübten Druckes vorgesehen ist, an die eine Auswertungsschaltung für zeitlich aufeinander folgende Signale zur Erkennung der Bewegungsrichtung des ausgeübten Druckes auf der Foliensignalanordnung (2, 3) angeschlossen ist, wobei die Foliensignalanordnung einen ersten Teil (2), an den eine Auswertungsschaltung zur Erkennung einer beliebigen Bewegungsrichtung und entsprechenden Verschiebung einer Auswahlanzeige auf dem Bildschirm angeschlossen ist und einen zweiten Teil aufweist, an den eine Auswertungsschaltung zur Erkennung einer linearen Auf - oder Abbewegung und zur entsprechenden Änderung des mit der Auswahlanzeige angesteuerten Datenwertes angeschlossen ist.

Fig. 1

## Eingabevorrichtung für Steuerungsdaten von Maschinen

Die Erfindung betrifft eine Eingabevorrichtung für Steuerungsdaten von Maschinen in ein Datenverarbeitungsgerät mit einem Bildschirm, auf dem verschiedene Steuerungsdaten angezeigt werden.

Die üblichen Eingabetastaturen für EDV-Geräte erfordern eine gute Ausbildung und eine ausgeprägte Vertrautheit der Bedienperson mit der Tastatur. Für Maschinensteuerungen sind derartige Tastaturen in aller Regel nicht brauchbar, da sie von vielen Bedienpersonen ausführbar sein sollten.

Bekannte vereinfachte Eingabevorrichtungen, die auch für Maschinensteuerungen eingesetzt oder vorgeschlagen worden sind, sind Maus, Joy-Stick, Rollkugel, Touch-Screen und Lichtgriffel.

Die Maus ist ein verschiebliches Rollelement, dessen Verschiebeweg auf dem Bildschirm als Cursorbewegung dargestellt wird. Die Rollkugel stellt quasi eine Umkehrung der Maus dar. Die freie Rollbewegung wird in eine Cursorbewegung auf dem Bildschirm besetzt. Diese Vorrichtungen, wie auch der Joy-Stick, haben den Nachteil, daß mechanisch bewegte Teile vorgesehen sind, deren Funktion durch Staubeinwirkungen, wie sie bei Maschinensteuerungen häufig vorkommen, gestört werden kann. Der Joy-Stick bietet darüber hinaus nur eingeschränkte Positioniermöglichkeiten, da die eingestellte Position durch Zurückziehen des Joy-Sticks in seine Ausgangsposition regelmäßig wieder verlassen wird.

Der Touch-Screen wird durch eine durchsichtige Folienanordnung gebildet, in der eine flächige Schaltermatrix durch Aufdampfen von Kontaktflächen auf zwei zueinander bewegbaren Folie erzeugt worden ist. Der mit dem Finger betätigbare Touch-Screen erlaubt aufgrund der Mindestmaße der Schalter nur eine grobe Positionierung des Cursors. Eine feinere Positionierung ist mit dem Lichtgriffel möglich, der ähnlich wie ein Touch-Screen funktioniert. Die Notwendigkeit eines Hilfsmittels zur Eingabe von Daten ist jedoch für Maschinensteuerungen nachteilig, da er verlegt werden kann und seine Verwendung die Zerstörungsgefahr erhöht.

Ein weiterer Nachteil der bekannten Eingabevereinfachung besteht darin, daß mit ihnen zwar ein Datenwert angesteuert werden kann, für seine Änderung jedoch regelmäßig eine numerische Tastatur betätigt werden muß.

Der Erfindung liegt die Aufgabe zugrunde, eine Eingabevorrichtung der eingangs erwähnten Art so auszubilden, daß ohne elektromechanische Hilfsmittel sowohl eine schnelle Anwahl bestimmter Steuerungsdaten als auch deren Veränderung möglich ist, wobei die Eingabevorrichtung auch für den rauhen Betrieb einer Maschinensteuerung verwendbar sein soll.

Diese Aufgabe wird erfindungsgemäß mit einer Eingabevorrichtung der eingangs erwähnten Art gelöst, die eine durch Druck betätigbare Foliensignalanordnung zur Erzeugung von Signalen in Abhängigkeit von der Position des ausgeübten Druckes aufweist, an die eine Auswertungsschaltung für zeitlich aufeinanderfolgende Signale zur Erkennung der Bewegungsrichtung des ausgeübten Druckes auf der Foliensignalanordnung angeschlossen ist, wobei die Foliensignalanordnung einen ersten Teil, an den eine Auswertungsschaltung zu Erkennung beliebiger Bewegungsrichtungen und entsprechender Verschiebung einer Auswahlanzeige auf dem Bildschirm angeschlossen ist und einen zweiten Teil aufweist, an den eine Auswertungsschaltung zur Erkennung einer linearen Auf- oder Abbewegung und zur entsprechenden Änderung des mit der Auswahlanzeige angesteuerten Datenwertes angeschlossen ist.

Bei der erfindungsgemäßen Eingabevorrichtung wird auf das an sich bekannte Prinzip einer Foliensignalanordnung zurückgegriffen. Diese ist schmutzunanfällig und läßt sich vorzugsweise durch Fingerdruck ohne fremde Hilfsmittel betätigen. Die erfindungsgemäße Foliensignalanordnung weist wenigstens zwei Teile auf, von denen das erste Teil mit einer flächig jede Bewegungsrichtung detektierenden Auswertungsschaltung verbunden ist, die entsprechend der durchgeführten Druckbewegung auf der Foliensignalanordnung eine Verschiebung einer Auswahlanzeige auf dem Bildschirm vornimmt. Dabei wird lediglich eine relative Verschiebung von dem jeweiligen Ausgangspunkt der Auswahlanzeige vorgenommen. Es ist daher unerheblich, an welcher Stelle des ersten Teils der Foliensignalanordnung eine Betätigungsbewegung begonnen wird. Die Verschiebung der Auswahlanzeige richtet sich ausschließlich nach der Bewegungsrichtung sowie der Länge der durchgeführten Bewegung. Eine lange Bewegung führt zu einer relativ großen Verschiebung der Auswahlanzeige, während eine nur kurze Bewegung logischerweise eine nur geringe Verschiebung auf dem Bildschirm bewirkt. Der zweite Teil der Foliensignalanordnung ist mit einer Auswertungsschaltung verbunden, die lediglich eine Bewegung in einer ausgewählten linearen Richtung detektiert. Dabei können in der linearen Dimension zwei Bewegungsrichtungen unterschieden werden, beispielsweise eine Bewegung von oben nach unten und eine von unten nach oben. Entsprechend der durchgeführten linearen Bewegung wird der Datenwert, der mit der Auswahlanzeige angewählt worden ist, verändert. Eine lange Bewegung führt zu einer großen Veränderung des eingestellten Datenwertes, während eine kurze Bewegung nur eine geringe Veränderung des Datenwertes hervorruft. Selbstverständlich sind sowohl in dem ersten Teil als auch in dem zweiten Teil der Foliensignalanordnung mehrere nacheinander ausgeführte Bewegungen möglich.

Die erfindungsgemäße Eingabevorrichtung erlaubt daher aus schließlich durch Durchführung von beispielsweise Fingerbewegungen sowohl die Auswahl eines bestimmten Datenwertes als auch dessen Veränderung in vorgewählten Änderungsschritten. Die erfindungsgemäß Eingabevorrichtung erlaubt daher die gewünschte robuste und einfach zu bedienende Eingabe von Steuerungsdaten für eine Maschine.

In einer besonders bevorzugten Ausführungsform sind in dem zweiten Teil der Foliensignalanordnung mehrere Richtungsdetektionsanordnungen senkrecht zur linearen Auf- und Abbewegung nebeneinander angeordnet und mit einer Auswertungsschaltung verbunden, die in Abhängigkeit von der betätigten Richtungsdetektionsanordnung die Änderung des Datenwertes mit unterschiedlichen Änderungen ausführt. So kann beispielsweise in dem zweiten Teil der Foliensignalanordnung eine Auf- bzw. Abbewegung am rechten Rand des Feldes eine Inkrementierung in kleinen Schritten (beispielsweise Einerschritten), eine entsprechende Bewegung in der Mitte, eine Inkrementierung in mittelgroßen Schritten, beispielsweise Zehnerschritten, und eine Bewegung am linken Rand des Feldes eine Inkrementierung in großen Schritten, beispielsweise in Hunderterschritten, bewirken.

Die erfindungsgemäße Foliensignalanordnung kann aus einer Vielzahl von nebeneinander angeordneten Schaltern gebildet sein. Sie kann also eine Schalterfolie sein, wie sie für einen Touch-Screen verwendet wird. Alternativ ist es aber auch möglich, für die Foliensignalanordnung eine Widerstandsfolie zu verwenden, die entsprechend der Position des Druckes definierte Signalgrößen ausgibt. Die beiden Teile der Foliensignalanordnung können hardwaremäßig voneinander getrennt sein. Es ist aber auch möglich, die beiden Teile mit einer einzigen Foliensignalanordnung zu bilden und lediglich softwaremäßig getrennt auszuwerten. Dies gilt insbesondere auch für die Unterteilung des zweiten Teils der Foliensignalanordnung in die verschiedenen Detektionsanordnungen.

Die Erfindung soll im folgenden anhand von in der Zeichnung dargestellten Ausführungsbeispielen näher erläutert werden. Es zeigen:

Figur 1 - ein Eingabeterminal mit einem Bildschirm sowie darunter angeordneten Eingabevorrichtungen in einer festen Funktionsaufteilung,

Figur 2 - ein Ausführungsbeispiel für die Eingabevorrichtungen gemäß Figur 1 in zwei Foliensignalanordnungen,

Figur 3 - analoge Eingabevorrichtungen mit einer gemeinsamen Foliensignalanordnung,

Figur 4 - ein Beispiel für eine Darstellung auf dem Bildschirm gemäß Figur 1 bei einer Steuerung einer Schleifmaschine,

Figur 5 - eine Eingabevorrichtung, bei der die Foliensignalanordnung auf dem Bildschirm aufgebracht ist,

Figur 6 - den prinzipiellen Aufbau der Foliensignalanordnung mit einer Schaltermatrix,

Figur 7 - einen prinzipiellen Aufbau der Foliensignalanordnung mit einer Widerstandsfolie.

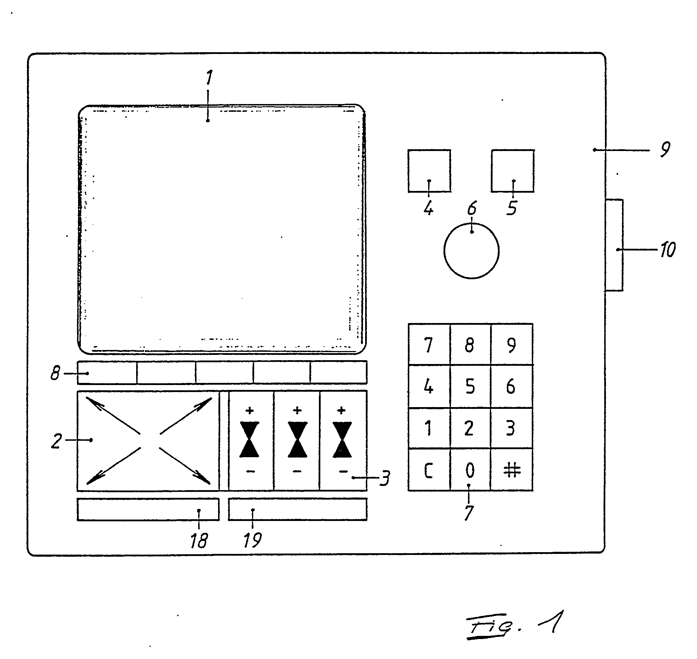

Figur 1 zeigt ein Eingabeterminal für eine Schleifmaschine, die einen Bildschirm 1 aufweist, mit dessen Hilfe die Programmwahl für die Schleifmaschine im Dialogverfahren erfolgt. Der Wahlvorgang erfolgt mit Hilfe eines einen ersten Teil einer Foliensignalan ordnung bildenden Eingabefeldes 2 für eine Cursorsteuerung und eines einen zweiten Teil der Foliensignalanordnung bildenden Eingabefeldes 3 für die Veränderung von Maschinendaten. Das Terminal wird ergänzt durch eine Starttaste 4, eine Stoptaste 5 sowie eine Not-Aus-Taste 6 für den Maschinenmotor. Ergänzend könne eine numerische Tastatur 7 sowie Funktionstasten 8 vorgesehen sein. Die Verbindung mit der Maschine erfolgt über eine Schnittstelle 10. Zwei Tasten 18, 19 dienen zum "Anklicken" der mit den Eingabefeldern 2 und 3 angesteuerten Cursorpositionen bzw. Maschinendaten. Mit diesen Tasten 18, 19 wird somit eine vorgenommene Einstellung für die Eingabe bestätigt.

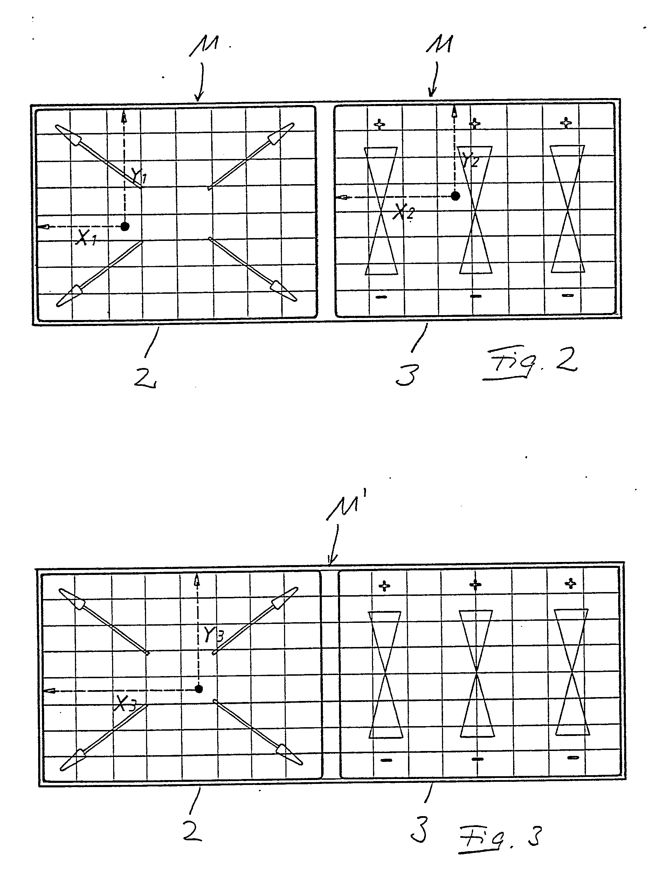

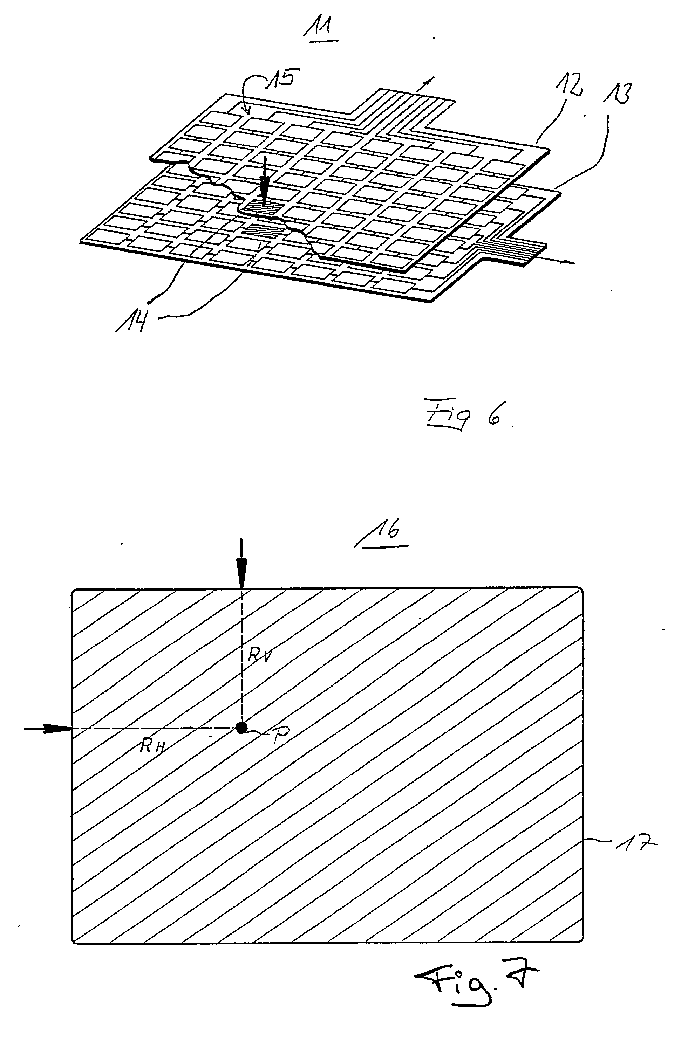

Figur 2 zeigt schematisch das Eingabefeld 2 und das Eingabefeld 3, die durch je eine Foliensignalanordnung 11 gebildet sind. Der Einfachheit halber ist eine Foliensignalanordnung 11 angedeutet, deren Aufbau in Figur 6 dargestellt ist. Die Foliensignalanordnung 11 besteht aus zwei voneinander beabstandeten, flexiblen Folien 12, 13, die auf den zueinander zeigenden Seiten mit einander gegenüberliegenden metallischen Flächen 14 beschichtet sind. Die metallischen Flächen 14 sind in Form einer Matrix verdrahtet, so daß elektrisch erkennbar ist, welche gegenüberliegenden Flächen 14 durch Druck auf die Folienoberfläche 15 miteinander in Kontakt gebracht worden sind.

Eine denkbare alternative Ausführungsform für eine Foliensignalanordnung 16 ist in Figur 7 dargestellt. Diese besteht im wesentlichen aus einer Widerstands folie 17, deren Widerstandswert in zwei Koordinaten RH und RV abgegriffen wird, um die Position des Druckpunktes P festzustellen.

Figur 2 deutet für die beiden Foliensignalanordnungen 11 jeweils die Schaltermatrix an. Das Eingabefeld 2 dient zur Positionierung eines Cursors auf dem Bildschirm 1. Der Cursor wird auf ein gewünschtes Feld geschoben, in dem auf dem Eingabefeld 2 eine Fingerbewegung von einem beliebigen Ausgangspunkt aus in eine Richtung durchgeführt wird, die der Richtung entspricht, in der der Cursor zum Zielpunkt hin verschoben werden muß. Reicht eine Fingerbewegung für das Erreichen des Zielpunktes nicht aus, muß diese Fingerbewegung wiederholt werden, bis der Cursor seinen Zielpunkt erreicht, um an diesem Punkt eine Zahlenangabe auszuwählen, die mit Hilfe des Eingabefeldes 3 verändert werden soll. Das Eingabefeld 3 besteht aus einer einheitlichen Schaltermatrix, die durch die Auswertungseinrichtung in drei Funktionsbereiche unterteilt ist. In den drei Funktionsbereichen lassen sich die Zahlenwerte erhöhen bzw. erniedrigen, und zwar beispielsweise die drei verschiedenen Ziffern einer dreistelligen Zahl oder mit drei verschiedenen Verstellschritten, so daß eine Grobverstellung beispielsweise in dem linken Feld, eine mittelfeine Verstellung im mittleren Feld und eine Feinverstellung im rechten Feld möglich ist.

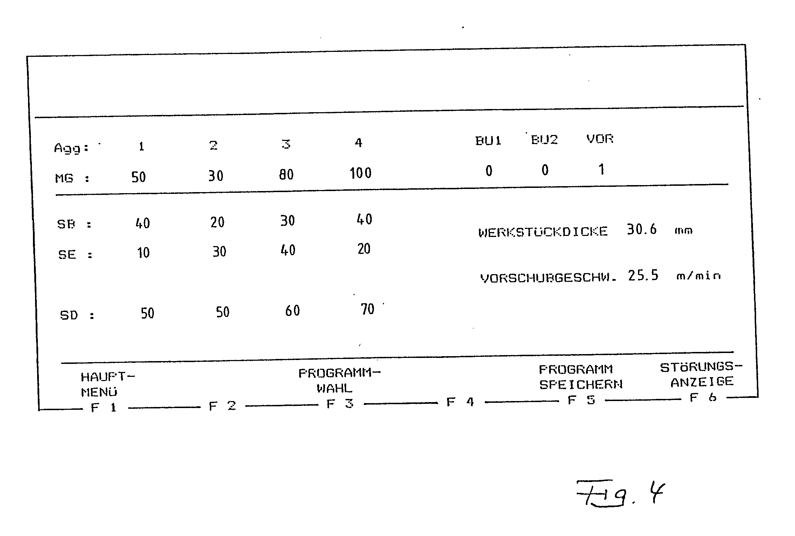

Figur 3 zeigt eine alternative Ausführungsform für die Eingabefelder 2, 3, die auf einer gemeinsamen Folienschalteranordnung 11' realisiert sind und nur durch die Auswertungseinrichtung voneinander in ihren Funktionen unterschieden werden. An der Betätigung der Eingabefelder 2, 3 ändert sich durch die Folienschalteranordnung 11' nichts.

Selbstverständlich können die verschiedenen Funktionsbereiche in dem Eingabefeld 3 auch andersartig aufgeteilt werden, beispielsweise verschiedenen Parametern zugeordnet werden.

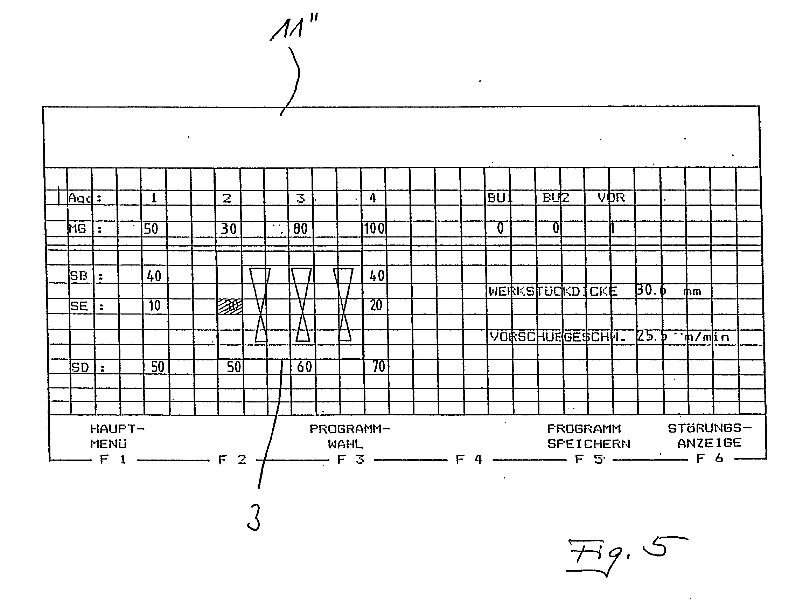

Figur 4 zeigt beispielhaft einen Bildschirmaufbau zur Eingabe von Maschinenparametern bei einer Schleifmaschine. In Form einer Tabelle sind die Maschinenparameter für vier Aggregate dargestellt.

In der unteren Zeile sind Funktionsblöcke F1 - F6 eingeblendet, durch deren Anwahl mit einem Cursor oder direkt durch die Funktionstasten 8 verschiedene Funktionen, wie Programmauswahl, Programmspeicherung oder Rückkehr zum Hauptmenü steuerbar sind. Die Eingabe von Maschinenparametern MG, SB, SE und SD für die verschiedenen Aggregate erfolgt durch Anwahl des betreffenden Parameters mit dem Cursor mit Hilfe des Eingabe-feldes 2 und durch anschließende Veränderung des Zahlenwertes mit Hilfe des Eingabefeldes 3. Die Veränderung des Zahlenwertes mit dem Eingabefeld 3 erfolgt im Sinne einer Erhöhung, wenn eine Bewegung von unten nach oben auf dem Eingabefeld 3 durchgeführt, während eine Bewegung von oben nach unten zu einer Erniedrigung führt.

Figur 5 zeigt eine alternative Ausführungsform, bei der die gleiche Steuerung an einer Folienschalteranordnung 11'' erfolgt, die durchsichtig ausgebildet und auf dem Bildschirm direkt angebracht ist. In dieser Anordnung ist es möglich, jedem Parameter einen eigenen Verstellblock zuzuordnen oder in gleicher Weise einen Parameter mit dem Cursor anzusteuern, wie dies in Figur 5 angedeutet ist. Die räumliche Zuordnung des Eingabefeldes 3 zur Verstellung von Zahlenwerten zu der Tabelle der Maschinenparameter macht sinnfällig, daß das Eingabefeld 3 zur Verstellung der Maschinenparameter dient.

Es ist ohne weiteres ersichtlich, daß die erfindungsgemäße Eingabevorrichtung, wie sie in Figur 5 dargestellt ist, auch mit Direktfunktionen kombiniert werden kann, wie sie vom Touch-Screen her bekannt sind. So ist es in dem Ausführungsbeispiel in Figur 5 ohne weiteres möglich, durch Druck auf den Funktionsblock F1 sofort zum Hauptmenü zurückzukehren oder durch Druck auf den Funktionsblock F5 ein eingestelltes Programm abzuspeichern. Gleiches gilt, wenn die Foliensignalanordnung 11, 11' neben dem Bildschirm positioniert ist.

## Ansprüche

1. Eingabevorrichtung für Steuerungsdaten von Maschinen in ein Datenverarbeitungsgerät mit einem Bildschirm (1), auf dem verschiedene Steuerungsdaten angezeigt werden, gekennzeichnet durch eine durch Druck betätigbare Foliensignalanordnung (11, 11', 11'', 16) zur Erzeugung von Signalen in Abhängigkeit von der Position des ausgeübten Druckes, an die eine Auswertungsschaltung für zeitlich aufeinander folgende Signale zur Erkennung der Bewegungsrichtung des ausgeübten Druckes auf der Foliensignalanordnung (2, 3) angeschlossen ist, wobei die Foliensignalanordnung einen ersten Teil (2), an den eine Auswertungsschaltung zur Erkennung einer beliebigen Bewegungsrichtung und entsprechenden Verschiebung einer Auswahlanzeige auf dem Bildschirm angeschlossen ist und einen zweiten Teil (3) aufweist, an den eine Auswertungsschaltung zur Erkennung einer linearen Auf- oder Abbewegung und zur entsprechenden Änderung des mit der Auswahlanzeige angesteuerten Datenwertes angeschlossen ist.

2. Eingabevorrichtung nach Anspruch 1, dadurch gekennzeichnet, daß in dem zweiten Teil (3) mehrere Richtungsdetektionsanordnungen senkrecht zur linearen Auf- und Abbewegung nebeneinander angeordnet sind und daß die Auswertungsschaltung in Abhängigkeit von der betätigten Richtungsdetektionsanordnung die Änderung des Datenwertes mit unterschiedlichen Änderungsschritten ausführt.

3. Eingabevorrichtung nach Anspruch 1 oder 2, dadurch gekennzeichnet, daß die Foliensignalanordnung (11, 11', 11'') aus einer Vielzahl von nebeneinander angeordneten Schaltern (14) besteht.

4. Eingabevorrichtung nach Anspruch 1 oder 2, dadurch gekennzeichnet, daß die Foliensignalanordnung (16) eine Widerstandsfolie (17) aufweist.

5. Eingabevorrichtung nach einem der Ansprüche 1 bis 4, dadurch gekennzeichnet, daß die Foliensignalanordnung (11, 11', 11", 16) mit Fingern betätigbar ist.

6. Eingabevorrichtung nach einem der Ansprüche 1 bis 5, dadurch gekennzeichnet, daß die Foliensignalanordnung (11, 11') separat vom Bildschirm (1) angeordnet ist.

7. Eingabevorrichtung nach einem der Ansprüche 1 bis 4, dadurch gekennzeichnet, daß wenigstens ein Teil der Foliensignalanordnung (11") durchsichtig ist und auf dem Bildschirm (1) angebracht ist.

Fig. 1

Fig. 2

Fig. 3

EP 0 374 912 A2

| Agg: | 1 | 2 | 3 | 4 | | BU1 | BU2 | VOR |
|---|---|---|---|---|---|---|---|---|
| MG : | 50 | 30 | 80 | 100 | | 0 | 0 | 1 |
| SB : | 40 | 20 | 30 | 40 | | | | |
| SE : | 10 | 30 | 40 | 20 | | | | |
| SD : | 50 | 50 | 60 | 70 | | | | |

WERKSTÜCKDICKE   30.6   mm

VORSCHUBGESCHW.   25.5   m/min

| HAUPT-MENÜ | | PROGRAMM-WAHL | | | PROGRAMM SPEICHERN | STÖRUNGS-ANZEIGE |
|---|---|---|---|---|---|---|
| F 1 | F 2 | F 3 | F 4 | | F 5 | F 6 |

Fig. 4

11"

| Aqd: | 1 | 2 | 3 | 4 | | BU1 | BU2 | VOR | |
| MG : | 50 | 30 | 80 | 100 | | 0 | 0 | 1 | |
| SB : | 40 | | | 40 | | | | | |
| SE : | 10 | | | 20 | | WERKSTUECKDICKE 30.6 mm | | | |
| | | | | | | VORSCHUBGESCHW. 25.5 m/min | | | |
| SD : | 50 | 50 | 60 | 70 | | | | | |

| HAUPT-MENÜ | PROGRAMM-WAHL | PROGRAMM SPEICHERN | STÖRUNGS-ANZEIGE |
| F 1 | F 2 — F 3 — F 4 | F 5 | F 6 |

3

Fig. 5

EP 0 374 912 A2

_11_

_15_

_12_ _13_

_14_

Fig 6

_16_

$R_V$

$R_H$

P

_17_

Fig. 7